# FASCICULE DE BREVET EUROPEEN

(11) **EP 2 691 250 B1**
(45) Date de publication et mention de la délivrance du brevet: **10.04.2019**
(21) Numéro de dépôt: 12711641.6
(22) Date de dépôt: 30.03.2012
(51) Int. Cl.: B60H 1/00

(54) **DISPOSITIF ET PROCÉDÉ DE DÉGIVRAGE / DÉSEMBUAGE POUR VÉHICULE A PROPULSION ÉLECTRIQUE**
ENTEISUNGS-/BESCHLAGSVERHINDERUNGSVORRICHTUNG FÜR ELEKTRISCH ANGETRIEBENE FAHRZEUGE
DE-ICING/DEFOGGING DEVICE FOR ELECTRICALLY PROPELLED VEHICLES

(30) Priorité: 31.03.2011 FR 1152691
(43) Date de publication de la demande: 05.02.2014
(73) Titulaire: Valeo Systemes Thermiques, 78320 Le Mesnil Saint Denis (FR)
(72) Inventeur: DE PELSEMAEKER, Georges, F-78125 Poigny-la-Fôret (FR); AZZOUZ, Kamel, F-75012 Paris (FR)
(74) Mandataire: Metz, Gaëlle
(86) Numéro de dépôt international: PCT/EP2012/055809
(87) Numéro de publication internationale: WO 2012/131047

(56) Documents cités:
- EP-A1- 2 239 158
- US-A1- 2006 225 441
- US-A1- 2007 033 951

## Description

La présente invention concerne un dispositif et procédé de dégivrage / désembuage d'un véhicule automobile à système de traction partiellement ou totalement électrique, tel que montré dans EP 2239158 A1.

Actuellement, pour les véhicules à moteur thermique, le système de climatisation est classiquement composé d'un compresseur, d'un condenseur et d'un évaporateur. Il est généralement dimensionné pour fournir des quantités importantes de frigories, de façon à refroidir l'ensemble de l'atmosphère de l'habitacle. La puissance nécessaire au fonctionnement de tels systèmes est prélevée sur le moteur. Une partie de l'air frais produit par ces systèmes de climatisation est aussi utilisée pour assurer le dégivrage / désembuage des vitres du véhicule, l'air refroidi ayant abandonné une partie de sa vapeur d'eau au cours du refroidissement et se trouvant de ce fait plus éloigné du point de saturation qu'un air non refroidi.

Dans les véhicules électriques, on considère aujourd'hui qu'il convient de réserver un maximum de l'énergie qui est disponible dans les batteries électriques à la seule propulsion du véhicule, de façon à disposer d'une autonomie suffisante. La présente invention est ainsi née de l'idée d'une séparation des fonctions de confort, telle que la climatisation du véhicule, des fonctions de sécurité, telle que le dégivrage/désembuage, remplies précédemment, dans des véhicules à moteur thermique, par un seul et même système, à savoir le système de climatisation.

Il convient alors d'imaginer des systèmes alternatifs, ne fonctionnant pas ou peu sur l'énergie de ces batteries pour assurer des fonctions de réfrigération, pour les besoins du dégivrage / désembuage des vitrages.

Le problème peut se poser de la même façon, même si c'est dans une moindre mesure, dans les véhicules à traction hybride, c'est-à-dire, combinant un moteur thermique et une machine électrique pour assurer l'entraînement du véhicule.

L'invention se propose donc d'assurer le dégivrage / désembuage d'un véhicule électrique à l'aide d'un dispositif qui puisse fonctionner en autonome vis-à-vis de l'énergie stockée dans les batteries électriques de propulsion du véhicule ou, à défaut, en prélevant le moins possible de cette énergie.

A cet effet l'invention porte sur un dispositif de désembuage et/ou de dégivrage d'un véhicule automobile à système d'entrainement partiellement ou totalement électrique caractérisé selon la revendication 1.

Grâce à la batterie thermique dans laquelle du froid a pu être stocké, le dégivrage / désembuage ne dépend donc plus seulement de l'état de charge de la source de courant utilisée.

Selon différents modes de réalisation,
- les moyens de refroidissement sont des dispositifs de refroidissement thermoélectriques.
- la batterie thermique comprend un matériau à changement de phase dont la température de changement de phase est comprise entre 0 et - 5°C. Cela permet de garantir que la température du fluide frigoporteur restera inférieure à une valeur telle que 8°C, tout en restant positive, lors de l'échange de chaleur servant au dégivrage/désembuage.
- le matériau à changement de phase est un eutectique dont la chaleur latente de changement de phase est supérieure ou égale à 300 kJ/kg. Il est préférentiellement choisi pour être au moins égal à 312 kJ/kg.
- ledit dispositif comprend des moyens de contrôle de la circulation du fluide frigoporteur dans chacune desdites branches permettant, de façon sélective :
   - une circulation du fluide en série dans la branche de sources thermiques et dans la branche de charge,
   - une circulation en série dans la branche de sources thermiques et dans la branche de dégivrage / désembuage ;
- lesdits moyens de contrôle sont constitués d'une vanne trois voies, chacune desdites branches étant reliée à l'une des voies de la vanne trois voies par l'une de leur extrémité.

L'invention concerne également un procédé de dégivrage / désembuage d'un véhicule automobile à système d'entrainement partiellement ou totalement électrique, selon la revendication 7.

Selon un exemple de réalisation
- on repère un mode dans lequel le véhicule est connecté à un réseau électrique domestique, dit mode d'arrêt, et un mode dans lequel le système d'entraînement du véhicule est actif, dit mode de roulage,
- en cas de repérage dudit mode d'arrêt, on alimente lesdits moyens de refroidissement à partir dudit réseau électrique domestique.

On dispose ainsi d'une solution exploitant une source de courant extérieure au véhicule et permettant d'augmenter son autonomie en ne puisant pas dans les batteries électriques pour stocker du froid dans la batterie thermique.

Selon un exemple de réalisation, lesdits moyens de refroidissement étant constitués d'un dispositif de refroidissement thermoélectrique, on prévoit :
- trois branches de circulation dudit fluide parmi lesquelles,
   - la première branche, dite de sources thermiques, comprend en série le dispositif de refroidissement thermoélectrique et la batterie thermique,
   - la seconde branche, dite de dégivrage / désembuage, comprend ledit échangeur de chaleur,
   - la troisième branche est dite de charge,
   - une pompe électrique de circulation du fluide frigoporteur dans lesdites branches,
   - un ventilateur électrique permettant de forcer la circulation du flux d'air à travers ledit échangeur de chaleur.

En mode d'arrêt, on pourra alors stocker du froid dans la batterie thermique en faisant circuler le fluide en série dans la branche de charge et dans la branche de sources thermiques, en alimentant le dispositif de refroidissement thermoélectrique, sans alimenter le ventilateur.

En mode d'arrêt, on pourra aussi refroidir le fluide traversant l'échangeur de chaleur en faisant circuler le fluide en série dans la branche de sources thermiques et dans la branche de dégivrage / désembuage, en alimentant le dispositif de refroidissement thermoélectrique et le ventilateur.

En mode de roulage, on pourra refroidir l'air traversant l'échangeur de chaleur en faisant circuler le fluide frigoporteur en série dans la branche de sources thermiques et dans la branche de dégivrage / désembuage, et en alimentant le ventilateur sans alimenter le dispositif de refroidissement thermoélectrique.

En mode de roulage, on pourra aussi repérer des conditions de déchargement de la batterie thermique et refroidir l'air traversant l'échangeur de chaleur en faisant circuler le fluide frigoporteur en série dans la branche de sources thermiques et dans la branche de dégivrage / désembuage, en alimentant le ventilateur et le dispositif de refroidissement thermoélectrique.

L'invention sera mieux comprise à la lumière de la description suivante qui n'est donnée qu'à titre indicatif et qui n'a pas pour but de la limiter, accompagnée des dessins joints parmi lesquels :
- la figure 1 illustre de façon schématique un mode de réalisation du dispositif selon l'invention, dans un premier mode de fonctionnement,
- la figure 2 illustre de façon schématique le dispositif de la figure 1, dans un second mode de fonctionnement,
- la figure 3 illustre de façon schématique le dispositif de la figure 1, dans un troisième mode de fonctionnement,

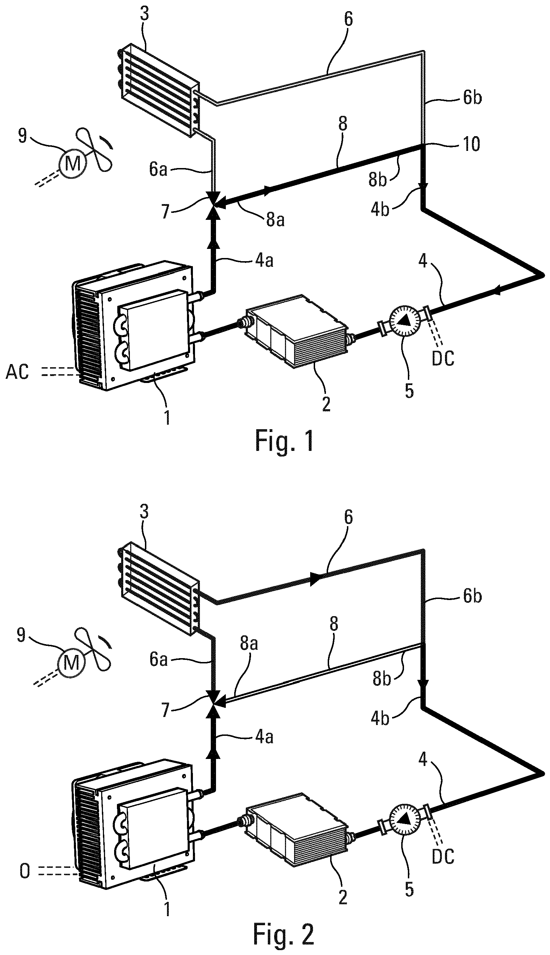

Comme illustré sur les figures 1 à 3, le dispositif de dégivrage / désembuage conforme à l'invention comprend des moyens 1 pour refroidir un fluide frigoporteur, par exemple de l'eau additionnée de glycol, à partir d'au moins une source de courant électrique, non représentée, et une batterie thermique 2 formant moyen de stockage de froid.

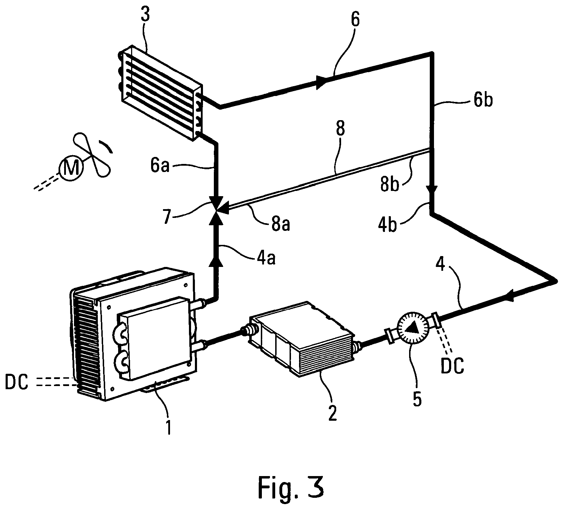

De plus, ledit dispositif est configuré pour permettre, d'une part, lors de certaines phases, un refroidissement dudit fluide frigoporteur par lesdits moyens 1 pour refroidir le fluide frigoporteur et un stockage du froid depuis ledit fluide frigoporteur vers ladite batterie thermique, comme cela est illustré sur la figure 1 et, d'autre part, lors d'autres phases, une restitution de chaleur (en l'occurrence un déstockage de froid) de ladite batterie thermique vers ledit fluide frigoporteur, comme cela est illustré aux figures 2 et 3.

Les moyens de refroidissement 1 sont, par exemple, un dispositif de refroidissement thermoélectrique, fonctionnant par l'effet Peltier, qui utilise de l'énergie électrique pour créer des différences de température entre deux éléments, l'un se chauffant et l'autre se refroidissant. Un tel système est nettement plus restreint en taille et en consommation d'énergie qu'un système classique de production de froid à l'aide d'une machine frigorifique embarquée qui comprend un compresseur, un condenseur et un évaporateur. Il est mieux adapté à la fonction d'assèchement de l'air de dégivrage / désembuage que l'on cherche à réaliser en réponse au problème technique posé.

Quant à la batterie thermique 2, il pourra s'agir d'une batterie à chaleur latente. Une telle batterie est configurée pour pouvoir être traversée par le fluide frigoporteur. Elle est en outre munie d'un matériau à changement de phase (MCP), encapsulé dans la batterie de façon à ce qu'un échange de chaleur puisse avoir lieu entre le MCP et le fluide frigoporteur. Le MCP est choisi de façon à ce que, lorsque la batterie est traversée par le liquide frigoporteur, prévu suffisamment froid, c'est-à-dire à une température inférieure à la température de solidification du MCP, celui-ci se solidifie et par conséquent cède de la chaleur par changement de phase liquide-solide, ce qui revient à un stockage de froid. L'énergie latente de changement de phase pourra également donner lieu au refroidissement du fluide frigoporteur en le faisant circuler dans la batterie, lorsqu'il est à une température supérieure à la température de fusion du MCP et que la batterie a stocké suffisamment de froid.

Pour être le mieux adapté à la fonction de dégivrage / désembuage le matériau à changement de phase, qui est encapsulé dans des tubes de la batterie thermique, est sélectionné pour avoir une température de changement de phase comprise entre 0 et - 5°C, et de façon préférentielle proche de - 3,7 °C, ceci afin de garantir une température dans l'échangeur de chaleur qui soit comprise entre 0 et 8 °C. Le matériau MCP doit également avoir une chaleur latente de changement de phase qui soit la plus grande possible pour garantir une grande densité de stockage. Pour cela le matériau préférentiellement utilisé est un eutectique dont la chaleur latente est de 312 kJ/kg.

Le dispositif pourra aussi comprendre un échangeur de chaleur 3, apte à être traversé par ledit fluide frigoporteur et par le flux d'air à déshumidifier, ledit échangeur permettant de réaliser un échange de calories entre l'air de dégivrage / désembuage et ledit fluide frigoporteur. Il pourra s'agir, par exemple, d'un échangeur, froid, du type tubes - intercalaires, c'est-à-dire, comprenant un faisceau de tubes parallèles parcourus par ledit fluide frigoporteur, lesdits tubes étant reliés par leur extrémité à des boîtes collectrices présentant une entrée et une sortie pour le fluide frigoporteur. Des intercalaires sont prévus entre les tubes et sont traversés par le flux d'air. Lesdits tubes et intercalaires sont configurés pour refroidir le flux d'air passant au contact des intercalaires à partir des frigories circulant dans les tubes.

Ledit dispositif pourra être placé dans un boîtier d'un système de conditionnement d'air, non-représenté, avec un ventilateur ou pulseur 9, permettant de forcer un flux d'air à travers ledit échangeur destiné au dégivrage / désembuage.

Selon l'exemple de réalisation illustré, ledit dispositif selon l'invention comprend trois branches de circulation dudit fluide frigoporteur.

La première branche 4, dite de sources thermiques, comprend en série les moyens de refroidissement du fluide frigoporteur 1 et la batterie thermique 2. Elle pourra aussi comprendre une pompe 5 de circulation dudit fluide frigoporteur, par exemple montée en série avec la batterie thermique 2 et les moyens de refroidissement 1, notamment dans cet ordre.

La seconde branche 6, dite de dégivrage / désembuage, comprend ledit échangeur de chaleur 3.

Ledit dispositif comprend en outre des moyens 7 de contrôle de la circulation du fluide dans chacune desdites branches permettant, de façon sélective :
- une circulation du fluide en série dans la troisième branche 8, dite de charge, et dans la branche 4 de sources thermiques,
- une circulation en série dans la branche 4 de sources thermiques et dans la branche de dégivrage / désembuage 6.

Il pourra s'agir, par exemple, d'une vanne trois-voies, chacune desdites branches étant reliée à l'une des voies de la vanne trois-voies par l'une de leur extrémité 4a, 6a, 8a. Lesdites branches 4, 6, 8 sont par ailleurs reliées entre elles au niveau d'un point commun 10 placé à leur autre extrémité 4b, 6b, 8b.

Ledit dispositif est configuré pour permettre la mise en oeuvre, totale ou partielle, du procédé conforme à l'invention dont la description suit.

Selon ce dernier, comme déjà dit, lors de certaines phases, on stocke du froid depuis ledit fluide frigoporteur dans ladite batterie 2 en refroidissant ledit fluide frigoporteur par lesdits moyens de refroidissement 1, comme cela est illustré sur la figure 1. Lors d'autres phases, on refroidit le fluide frigoporteur par déstockage du froid de ladite batterie 2, comme cela est illustré aux figures 2 et 3. Quelle que soit la phase de fonctionnement, le fluide frigoporteur circule dans lesdits moyens de refroidissement 1. La batterie thermique 2 est continuellement reliée auxdits moyens de refroidissement 1 et peut être disposée en amont desdits moyens de refroidissement 1, selon le sens d'écoulement du fluide frigoporteur dans la branche 4 de sources thermiques comme cela est illustré sur les figures 1 à 3.

Lors des phases de restitution du froid par ladite batterie thermique 2, on pourra obtenir un refroidissement du flux d'air destiné au dégivrage / désembuage en faisant circuler le fluide frigoporteur à travers ladite batterie 2 et ledit échangeur 3, comme cela est illustré sur la figure 2.

On pourra aussi obtenir un refroidissement du flux d'air traversant l'échangeur de chaleur en faisant circuler le fluide frigoporteur à travers lesdits moyens 1 pour refroidir le fluide caloporteur et à travers ledit échangeur 3, comme illustré sur la figure 3.

On dispose ainsi d'un mode de stockage de froid et de deux modes permettant d'obtenir un refroidissement de l'air traversant l'échangeur de chaleur 3.

Par ailleurs, on distingue un mode dans lequel le véhicule est connecté à un réseau électrique domestique, dit mode d'arrêt, et un mode dans lequel le système d'entraînement du véhicule est actif, dit mode de roulage.

Et, en cas de repérage dudit mode d'arrêt, on alimente lesdits moyens 1 pour refroidir ledit fluide frigoporteur à partir dudit réseau électrique domestique, comme cela est illustré sur la figure 1.

Par réseau électrique domestique, on entend, par exemple, le réseau électrique basse tension d'un domicile ou d'une station de charge telle qu'un réseau électrique alternatif triphasé offrant un courant électrique de 220V à 240V, à 50 ou 60 Hz, entre phase et neutre.

A l'inverse, en mode de roulage, on peut alimenter lesdits moyens de refroidissement 1 à partir d'une source de courant du véhicule, notamment une source de courant du système d'entrainement du véhicule.

Il pourra s'agir d'un réseau électrique haute tension du véhicule, tel qu'un réseau offrant un courant continu de 400 V, reliant la machine électrique d'entrainement du véhicule à des batteries, dite de traction. Il pourrait aussi s'agir d'un réseau basse tension du véhicule, tel qu'un réseau offrant un courant continu de 12V, servant à alimenter différents organes électriques du véhicule depuis une batterie basse tension.

D'une façon plus générale, en mode d'arrêt les différents équipements électriques du dispositif de dégivrage / désembuage selon l'invention, tels que la pompe 5 et/ou le ventilateur 9, pourront être alimentés par ladite source de courant domestique tandis que, en mode de roulage, ils seront alimentés par ladite source de courant du véhicule.

De façon plus détaillée, comme illustré à la figure 1, en mode d'arrêt, on pourra tout d'abord stocker du froid dans la batterie thermique 2 en faisant circuler le fluide en série dans la branche de charge 8 et dans la branche de sources thermiques 4, notamment par la vanne trois-voies 7 dont les voies reliées aux dites branches 4, 8 sont prévues ouvertes tandis que la voie de ladite vanne 7, reliée à la branche de dégivrage / désembuage 6, est fermée. Et on alimente les moyens de refroidissement 1 par la source de courant domestique, sans alimenter le ventilateur 3. La pompe 5 est elle aussi alimentée par la source de courant domestique.

En mode de roulage, comme illustré à la figure 2, on pourra obtenir un refroidissement de l'air de dégivrage / désembuage en refroidissant l'air traversant l'échangeur de chaleur 3 grâce à une circulation du fluide frigoporteur dans la branche de sources thermiques 4 et dans la branche de dégivrage / désembuage 6, notamment par la vanne trois-voies 7 dont les voies reliées aux dites branches 4, 6 sont prévues ouvertes tandis que la voie de ladite vanne 7, reliée à la branche de charge 8, est fermée. Et on alimente la pompe 5 ainsi que, éventuellement, le ventilateur 9, sans alimenter les moyens de refroidissement 1. On minimise ainsi le courant pris sur les batteries électriques en se servant du froid déstocké par la batterie thermique 2.

Toujours en mode de roulage, on pourra repérer des conditions de déchargement, partiel ou total, de la batterie thermique 2 et refroidir cependant l'air qui traverse l'échangeur de chaleur 3 en faisant circuler le fluide frigoporteur en série dans la branche de sources thermiques 4 et dans la branche de dégivrage / désembuage 6, notamment par la vanne trois-voies 7 dont les voies reliées aux dites branches 4, 6 sont prévues ouvertes tandis que la voie de ladite vanne 7, reliée à la branche de charge 8, est fermée. Et on alimente la pompe 5 et le dispositif de refroidissement thermoélectrique 1 ainsi que, éventuellement, le ventilateur 9. On peut ainsi, en particulier si la demande de dégivrage / désembuage se prolonge et si l'état de charge des batteries électriques du véhicules le permet, prolonger le refroidissement de l'air de dégivrage / désembuage, même si la batterie thermique 2 n'a plus ou que peu de froid à fournir.

## Revendications

1. Dispositif de désembuage et/ou de dégivrage d'un véhicule automobile à système d'entrainement partiellement ou totalement électrique, ledit dispositif comprenant des moyens (1) pour refroidir un fluide frigoporteur à partir d'au moins une source de courant électrique, et une batterie thermique (2), ledit dispositif étant configuré pour permettre, lors de certaines phases, un refroidissement dudit fluide frigoporteur par lesdits moyens de refroidissement (1) et un stockage de froid depuis ledit fluide frigoporteur dans ladite batterie (2) et, lors d'autres phases, un déstockage de froid de ladite batterie (2) vers ledit fluide frigoporteur, ledit dispositif comprenant en outre un radiateur de dégivrage (3), apte à être traversé par ledit fluide frigoporteur et par l'air de dégivrage, ledit radiateur (3) permettant de réaliser un échange de chaleur entre ledit air de dégivrage et ledit fluide frigoporteur, le dispositif comportant une première branche (4), dite de sources thermiques, comprenant en série les moyens de refroidissement (1) et la batterie thermique (2), une seconde branche (6), dite de dégivrage, comprenant ledit radiateur de dégivrage (3), **caractérisé en ce que** ledit dispositif comprend une troisième branche (8), dite de charge, dudit fluide frigoporteur, et **en ce que** ledit dispositif est configuré pour permettre une circulation du fluide en série dans la branche de sources thermiques (4) et dans la branche de dégivrage (6).

2. Dispositif selon la revendication 1 dans lequel les moyens de refroidissement (1) sont des dispositifs de refroidissement thermoélectriques.

3. Dispositif selon l'une des revendications 1 ou 2 dans lequel la batterie thermique comprend un matériau à changement de phase dont la température de changement de phase est comprise entre 0 et - 5°C.

4. Dispositif selon la revendication 3 dans lequel le matériau à changement de phase est un eutectique dont la chaleur latente de changement de phase est supérieure ou égale à 300 kJ/kg.

5. Dispositif selon la revendication 1 comprenant des moyens (7) de contrôle de la circulation du fluide frigoporteur dans chacune desdites branches (4, 6, 8) permettant, de façon sélective :
- la circulation du fluide en série dans la branche de sources thermiques (4) et dans la branche de charge (8),
- une circulation du fluide en série dans la branche de sources thermiques (4) et dans la branche de dégivrage (6).

6. Dispositif selon la revendication 5 dans lequel lesdits moyens (7) de contrôle sont constitués d'une vanne trois-voies, chacune desdites branches (4, 6, 8) étant reliée à l'une des voies de la vanne trois-voies par l'une de leur extrémité.

7. Procédé de désembuage et/ou dégivrage d'un vitrage d'un véhicule automobile à système d'entrainement partiellement ou totalement électrique, dans lequel
- l'on prévoit des moyens de refroidissement (1) d'un fluide frigoporteur, à partir d'au moins une source de courant électrique, et une batterie thermique (2) disposée en série avec lesdits moyens (1) de refroidissement, et un radiateur de dégivrage (3), apte à être traversé par ledit fluide frigoporteur et un flux d'air destiné au dégivrage / désembuage dudit véhicule, ledit radiateur (3) permettant de réaliser un échange de chaleur entre ledit flux d'air et ledit fluide frigoporteur,
- lors de certaines phases, on stocke du froid depuis ledit fluide frigoporteur dans ladite batterie (2) en refroidissant ledit fluide frigoporteur par lesdits moyens de refroidissement (1),
- lors d'autres phases, on refroidit le fluide frigoporteur par un déstockage de froid depuis ladite batterie (2) vers ledit fluide frigoporteur et on fait circuler en série le fluide frigoporteur à travers lesdits moyens de refroidissement (1) et à travers ledit radiateur (3),
- lors des phases de refroidissement dudit fluide frigoporteur par les moyens de refroidissement (1), on fait circuler le fluide frigoporteur à travers lesdits moyens de refroidissement (1) et à travers ledit radiateur (3),
- lors des phases de déstockage du froid par ladite batterie thermique (2), on fait circuler le fluide frigoporteur à travers ladite batterie (2) et à travers ledit radiateur (3).

8. Procédé selon la revendication 7 dans lequel :
- on repère un mode dans lequel le véhicule est connecté à un réseau électrique domestique, dit mode d'arrêt, et un mode dans lequel le système d'entraînement du véhicule est actif, dit mode de roulage,
- en cas de repérage dudit mode d'arrêt, on alimente lesdits moyens de refroidissement (1) à partir dudit réseau électrique domestique.

9. Procédé selon la revendication 8 dans lequel, lesdits moyens de refroidissement (1) étant constitués d'un dispositif de refroidissement thermoélectrique, on prévoit :
- trois branches de circulation dudit fluide parmi lesquelles,
- la première branche (4), dite de sources thermiques, comprend en série ledit dispositif de refroidissement thermoélectrique (1) et la batterie thermique (2),
- la seconde branche (6), dite de dégivrage, comprend ledit radiateur de dégivrage (3),
- la troisième branche (8) est dite de charge,
- une pompe électrique (5) de circulation du fluide frigoporteur dans lesdites branches,
- un ventilateur électrique (9) permettant de forcer la circulation du flux d'air à travers ledit radiateur de dégivrage (3).

10. Procédé selon la revendication 9 dans lequel, en mode d'arrêt, on stocke du froid dans la batterie thermique (2) en faisant circuler le fluide en série dans la branche de charge (4) et dans la branche de sources thermiques (8), et en alimentant le dispositif de refroidissement thermoélectrique (1) sans alimenter le ventilateur (9).

11. Procédé selon l'une quelconque des revendications 7 à 10 dans lequel, en mode de roulage, on refroidit l'air traversant le radiateur de dégivrage (3) en faisant circuler le fluide frigoporteur en série dans la branche de sources thermiques (4) et dans la branche de dégivrage (6) et en alimentant le ventilateur (9) sans alimenter le dispositif de refroidissement thermoélectrique (1).

12. Procédé selon l'une quelconque des revendications 7 à 10 dans lequel, en mode de roulage, on repère des conditions de déchargement de la batterie thermique et on refroidit l'air traversant le radiateur de dégivrage (3) en faisant circuler le fluide frigoporteur en série dans la branche de sources thermiques (4) et dans la branche de dégivrage (6) et en alimentant le ventilateur (9) et le dispositif de refroidissement thermoélectrique (1).

## Patentansprüche

1. Vorrichtung zur Beschlagentfernung und/oder Enteisung eines Kraftfahrzeugs mit teilweise oder vollständig elektrischem Antriebssystem, die Vorrichtung umfassend Mittel (1) zum Kühlen eines Kälteträgerfluids ausgehend von mindestens einer Quelle elektrischen Stroms und eine Thermalbatterie (2), wobei die Vorrichtung ausgelegt ist, bei bestimmten Phasen eine Kühlung des Kälteträgerfluids durch die Mittel zum Kühlen (1) und eine Speicherung von Kälte von dem Kälteträgerfluid in der Batterie (2) und bei anderen Phasen eine Freigabe von Kälte der Batterie (2) hin zu dem Kälteträgerfluid zu gestatten, die Vorrichtung ferner umfassend einen Enteisungsradiator (3), der geeignet ist, von dem Kälteträgerfluid und von der Enteisungsluft durchströmt zu werden, wobei es der Radiator (3) gestattet, einen Wärmeaustausch zwischen der Enteisungsluft und dem Kälteträgerfluid herzustellen, wobei die Vorrichtung einen ersten Zweig (4), der als Wärmequellenzweig bezeichnet wird, umfassend eine Reihe von Mitteln zum Kühlen (1) und die Thermalbatterie (2), einen zweiten Zweig (6), der als Enteisungszweig bezeichnet wird, umfassend den Enteisungsradiator (3), aufweist, **dadurch gekennzeichnet, dass** die Vorrichtung einen dritten Zweig (8) des Kälteträgerfluids, der als Ladezweig bezeichnet wird, umfasst, und dadurch, dass die Vorrichtung ausgelegt ist, eine Durchströmung des Fluids in Reihe in dem Wärmequellenzweig (4) und in dem Enteisungszweig (6) zu gestatten.

2. Vorrichtung nach Anspruch 1, wobei die Mittel zum Kühlen (1) thermoelektrische Kühlvorrichtungen sind.

3. Vorrichtung nach einem der Ansprüche 1 oder 2, wobei die Thermalbatterie ein Phasenwechselmaterial umfasst, dessen Phasenwechseltemperatur zwischen 0 und -5°C liegt.

4. Vorrichtung nach Anspruch 3, wobei das Phasenwechselmaterial ein Eutektikum ist, dessen latente Phasenwechselwärme größer oder gleich 300 kJ/kg ist.

5. Vorrichtung nach Anspruch 1, umfassend Mittel (7) zur Steuerung der Durchströmung des Kälteträgerfluids in jedem der Zweige (4, 6, 8), die selektiv Folgendes gestatten:
- die Durchströmung des Fluids in Reihe in dem Wärmequellenzweig (4) und in dem Ladezweig (8),
- eine Durchströmung des Fluids in Reihe in dem Wärmequellenzweig (4) und in dem Enteisungszweig (6).

6. Vorrichtung nach Anspruch 5, wobei die Mittel (7) zur Steuerung von einem Dreiwegeventil gebildet sind, wobei jeder der Zweige (4, 6, 8) mit einem der Wege des Dreiwegeventils an einem seiner Enden verbunden ist.

7. Verfahren zur Beschlagentfernung und/oder Enteisung einer Scheibe eines Kraftfahrzeugs mit teilweise oder vollständig elektrischem Antriebssystem, wobei
- Mittel zum Kühlen (1) eines Kälteträgerfluids ausgehend von mindestens einer Quelle elektrischen Stroms und eine Thermalbatterie (2), die in Reihe mit den Mitteln zum Kühlen (1) angeordnet ist, und ein Enteisungsradiator (3), der geeignet ist, von dem Kälteträgerfluid und einem Luftstrom durchströmt zu werden, der zur Enteisung/Beschlagentfernung des Fahrzeugs bestimmt ist, vorgesehen werden, wobei es der Radiator (3) gestattet, einen Wärmeaustausch zwischen dem Luftstrom und dem Kälteträgerfluid herzustellen,
- bei bestimmten Phasen Kälte von dem Kälteträgerfluid in der Batterie (2) durch Kühlen des Kälteträgerfluids durch die Mittel zum Kühlen (1) gespeichert wird,
- bei anderen Phasen das Kälteträgerfluid durch eine Freigabe von Kälte von der Batterie (2) hin zu dem Kälteträgerfluid gekühlt wird und das Kälteträgerfluid in Reihe durch die Mittel zum Kühlen (1) und durch den Radiator (3) strömen gelassen wird,
- bei den Phasen des Kühlens des Kälteträgerfluids durch die Mittel zum Kühlen (1) das Kälteträgerfluid durch die Mittel zum Kühlen (1) und durch den Radiator (3) strömen gelassen wird,
- bei den Phasen der Freigabe der Kälte durch die Thermalbatterie (2) das Kälteträgerfluid durch die Batterie (2) und durch den Radiator (3) strömen gelassen wird.

8. Verfahren nach Anspruch 7, wobei:
- ein Modus, in welchem das Fahrzeug an ein Hausstromnetz angeschlossen ist, der als Stoppmodus bezeichnet wird, und ein Modus, in welchem das Antriebssystem des Fahrzeugs aktiv ist, der als Fahrmodus bezeichnet wird, erkannt werden,
- im Falle einer Erkennung des Stoppmodus die Mittel zum Kühlen (1) ausgehend vom Hausstromnetz versorgt werden.

9. Verfahren nach Anspruch 8, wobei Folgendes vorgesehen wird, wobei die Mittel zum Kühlen (1) von einer thermoelektrischen Kühlvorrichtung gebildet sind:
- drei Durchströmungszweige des Fluids, von denen
- der erste Zweig (4), der als Wärmequellenzweig bezeichnet wird, die thermoelektrische Kühlvorrichtung (1) und die Thermalbatterie (2) in Reihe umfasst,
- der zweite Zweig (6), der als Enteisungszweig bezeichnet wird, den Enteisungsradiator (3) umfasst,
- der dritte Zweig (8) als Ladezweig bezeichnet wird,
- eine elektrische Pumpe (5) zur Durchströmung des Kälteträgerfluids in den Zweigen,
- einen elektrischen Ventilator (9), der es gestattet, die Durchströmung des Luftstroms durch den Enteisungsradiator (3) zu erzwingen.

10. Verfahren nach Anspruch 9, wobei im Stoppmodus durch Strömenlassen des Fluids in Reihe im Ladezweig (4) und im Wärmequellenzweig (8) und durch Versorgen der thermoelektrischen Kühlvorrichtung (1), ohne den Ventilator (9) zu versorgen, Kälte in der Thermalbatterie (2) gespeichert wird.

11. Verfahren nach einem der Ansprüche 7 bis 10, wobei im Fahrmodus die Luft, die den Enteisungsradiator (3) durchströmt, durch Strömenlassen des Kälteträgerfluids in Reihe im Wärmequellenzweig (4) und im Enteisungszweig (6) und durch Versorgen des Ventilators (9), ohne die thermoelektrische Kühlvorrichtung (1) zu versorgen, gekühlt wird.

12. Verfahren nach einem der Ansprüche 7 bis 10, wobei im Fahrmodus Entladungszustände der Thermalbatterie erkannt werden und die Luft, die den Enteisungsradiator (3) durchströmt, durch Strömenlassen des Kälteträgerfluids in Reihe im Wärmequellenzweig (4) und im Enteisungszweig (6) und durch Versorgen des Ventilators (9) und der thermoelektrischen Kühlvorrichtung (1) gekühlt wird.

## Claims

1. Device for defogging and/or defrosting a motor vehicle with a partially or totally electric propulsion system, said device comprising means (1) for cooling a coolant fluid using at least one electric current source, and a thermal battery (2), said device being configured to allow, in certain phases, the cooling of said coolant fluid by said cooling means (1) and the storage of cold from said coolant fluid in said battery (2), and, in other phases, the release of cold from said battery (2) into said coolant fluid, said device according to further comprising a defrosting radiator (3) through which said coolant fluid and the defrosting air can pass, said radiator (3) enabling a heat exchange to be provided between said defrosting air and said coolant fluid, the device comprising a first branch (4), called the thermal source branch, comprising the cooling means (1) and the thermal battery (2) in series, a second branch (6), called the defrosting branch, comprising said defrosting radiator (3),
**characterized in that** said device comprises a third branch (8), called the charging branch, for said coolant fluid, and **in that** said device is configured to provide serial fluid circulation in the thermal source branch (4) and in the defrosting branch (6).

2. Device according to Claim 1, wherein the cooling means (1) are thermoelectric cooling devices.

3. Device according to either of Claims 1 and 2, wherein the thermal battery comprises a phase change material whose phase change temperature is in the range from 0 to -5°C.

4. Device according to Claim 3, wherein the phase change material is a eutectic whose latent heat of phase change is greater than or equal to 300 kJ/kg.

5. Device according to Claim 1, comprising means (7) for controlling the circulation of the coolant fluid in each of said branches (4, 6, 8), for the selective provision of:
- the serial fluid circulation in the thermal source branch (4) and in the charging branch (8),
- serial fluid circulation in the thermal source branch (4) and in the defrosting branch (6).

6. Device according to Claim 5, wherein said control means (7) are composed of a three-way valve, each of said branches (4, 6, 8) being connected to one of the channels of the three-way valve at one of its ends.

7. Method for defogging and/or defrosting a glazing unit of a motor vehicle with a partially or totally electric propulsion system, wherein
- means (1) for cooling a coolant fluid, based on at least one electric current source, are provided, together with a thermal battery (2) arranged in series with said cooling means (1), and a defrosting radiator (3) is provided, through which said coolant fluid and a flow of air for the defrosting/defogging of said vehicle can pass, said radiator (3) enabling a heat exchange to be provided between said air flow and said coolant fluid,
- in certain phases, cold from said coolant fluid is stored in said battery (2) while said coolant fluid is cooled by said cooling means (1),
- in other phases, the coolant fluid is cooled by releasing cold from said battery (2) and sending it to said coolant fluid and the coolant fluid is made to circulate in a serial manner through said cooling means (1) and through said radiator (3),
- in the phases in which said coolant fluid is cooled by the cooling means (1), the coolant fluid is made to circulate through said cooling means (1) and through said radiator (3),
- in the phases in which cold is released from said thermal battery (2), the coolant fluid is made to circulate through said battery (2) and through said radiator (3).

8. Method according to claim 7, wherein:
- a mode in which the vehicle is connected to a domestic electricity supply, called the stationary mode, and a mode in which the propulsion system of the vehicle is active, called the drive mode, are detected,
- if said stationary mode is detected, said cooling means (1) are supplied with power from said domestic electricity supply.

9. Method according to Claim 8, wherein said cooling means (1) are composed of a thermoelectric cooling device, and the following are provided:
- three branches for the circulation of said coolant fluid, of which:
- the first branch (4), called the thermal source branch, comprises said thermoelectric cooling device (1) and the thermal battery (2) in series,
- the second branch (6), called the defrosting branch, comprises said defrosting radiator (3),
- the third branch (8) is called the charging branch,
- an electric pump (5) for circulating the coolant fluid in said branches,
- an electric fan (9) for forcing the circulation of the air flow through said defrosting radiator (3).

10. Method according to Claim 9, wherein, in stationary mode, cold is stored in the thermal battery (2) by making the fluid circulate in a serial manner through the charging branch (4) and through the thermal source branch (8), while the power is supplied to the thermoelectric cooling device (1), and no power is supplied to the fan (9).

11. Method according to any of Claims 7 to 10, wherein, in drive mode, the air passing through the defrosting radiator (3) is cooled by making the coolant fluid circulate in a serial manner through the thermal source branch (4) and through the defrosting branch (6), while power is supplied to the fan (9) and no power is supplied to the thermoelectric cooling device (1).

12. Method according to any of Claims 7 to 10, wherein, in drive mode, a discharged condition of the thermal battery is detected, and the air passing through the defrosting radiator (3) is cooled by making the coolant fluid circulate in a serial manner through the thermal source branch (4) and through the defrosting branch (6), while power is supplied to the fan (9) and to the thermoelectric cooling device (1).
